# EUROPEAN PATENT SPECIFICATION

(11) **EP 1 719 574 B1**
(45) Date of publication and mention of the grant of the patent: **15.10.2008**
(21) Application number: 06425288.5
(22) Date of filing: 02.05.2006
(51) Int. Cl.: B23Q 1/62, B23Q 7/04

(54) **Work centre with a number of numeric control axes for working long pieces, especially in wood**
Arbeitsanlage mit mehreren numerisch gesteuerten Achsen zum Bearbeitung von länglichen Werkstücken, insbesondere aus Holz
Centre de travail avec plusieurs axes commandés numériquement pour l'usinage de pièces allongées, spécialement en bois

(30) Priority: 02.05.2005 IT FI20050084
(43) Date of publication of application: 08.11.2006
(73) Proprietor: Paolino Bacci S.R.L., 56021 Cascina, PI (IT)
(72) Inventor: Ruggieri, Alberto, 56025 Pontedera, Pisa (IT)
(74) Representative: Mannucci, Michele

(56) References cited:
- EP-A- 1 055 485
- WO-A-01/89759
- WO-A-02/094500
- WO-A-20/04080649
- DE-A1- 10 108 134
- FR-A- 2 546 145
- US-A- 5 601 396

## Description

### Technical Field

This invention deals with a work centre or machine tool for machining long pieces, in particular wood pieces such as furniture components and specifically chair legs.

### Prior Art

In the field of wood machining work centres or machine tools of varying shapes have been developed depending on the type of pieces to work and processes to be performed on them.

EP-A-1055485 describes a machine tool or work centre for machining long symmetrical components or elements according to particularly fast working cycles. This work centre includes: a fixed vertical upright along which a saddle, bearing a work head with a first and a second numeric control oscillation or rotation axis, is movable according to a first vertical numeric control translation axis,; a pair of piece-carrying saddles with blocking means to block the workpieces, supported mobile along a second horizontal numeric control translation axis on a carriage, said carriage being mobile along a third horizontal numeric control translation axis, to move towards and away from said vertical upright. Two symmetrical pieces which are worked contemporarily are blocked onto the two saddles. The long workpieces are directed parallel to the translation axis of the carriage with an arrangement making it impossible to work some faces of the pieces and therefore, also according to the type of working processes required, it can be necessary to position the same piece in a multiple way.

Further work centres or machine tools for working long pieces are described in WO-A-02094500, WO-A-0189759, EP-A-873817.

### Objects and summary of the invention

An aim of this invention is to produce a work centre or machine tool which is particularly flexible and suited to work long pieces, specially components produced on a large scale or the like allowing to work a large number of sides and typically up to five sides of the piece without requiring its re-positioning.

This and other objects and advantages, which will appear clear to experts in the field from reading the text that follows, are obtained starting from a work centre of the kind described in EP-A-1.055.485, according to the preamble of claim 1 and is further characterized by the features of the characterising portion of claim 1.

According to a possible embodiment, the blocking means includes two blocking elements and preferably three blocking elements distanced from each other and substantially aligned along the translation axis. This makes it possible to block the workpieces in two or preferably three positions directing them in a vertical plane parallel to the translation axis of the saddle along the carriage which carries it. The combined movement along the three numeric control axes, which are preferably orthogonal to one another, makes it possible to work the piece by bringing the tools close to five of the six faces of an ideal parallelepiped within which the piece is contained. The only side that cannot be reached by the work tools is the one facing the floor. The components worked with this centre are typically chair legs or similar, which usually have a side without workmanship and therefore can be worked on all sides requiring the work of the tools, without the need to position the same piece more times on the work centre.

To be able to fix pieces of different shapes it is advantageous to ensure that the blocking elements are vertically adjustable, one independently of the other. Preferably, according to a preferred embodiment of the invention, the blocking elements are also adjustable one independently of the other in a horizontal direction parallel to the second horizontal translation axis, that is to the axis along which the piece-carrying saddle moves in relation to the carriage on which it is mounted.

According to a an advantageous embodiment of the invention, the blocking means includes vertically adjustable uprights and is fitted with pushers working preferably from the bottom up to block the pieces to work, for example against upper ledges, which are fixed or adjustable to adapt to the shape of the pieces to work. The distance between the uprights of the blocking means is preferably adjustable to achieve each time the best position for each piece or series of equal pieces to work

To obtain optimum sturdiness of the machine, according to an advantageous embodiment the vertical upright on which the head is supported is integral with a horizontal base, with a runner for said carriage, the runners extending parallel to said third translation axis.

Further advantageous features of the work centre of this invention are indicated in the attached claims and will be described in greater detail further on with reference to a realization specimen.

According to a particularly advantageous embodiment of the invention, at least one reference or abutment surface is associated to the blocking means, independent from the blocking means, arranged and designed in such a way that the piece to block is referred to such a surface with its own surface, to which the working processes to perform on the piece itself are referred, and that said surface of the piece to which the workings are referred remains fully free to be worked after being blocked. Usually, in traditional blocking systems the piece is brought to abut with its own surface of reference against verification surfaces that form part of the blocking equipment. This imposes a great limit on the possibilities of working the piece. In fact, as the blocking element, which forms the abutment and reference surface, remains in contact with the reference surface of the piece, this cannot be worked on the areas in contact with the abutment surface itself. According to this advantageous embodiment of the invention, instead, the ledge which comes into contact with the reference surface of the piece (i.e. the surface to which the working dimensions are referred) does not remain in contact with the piece after it is blocked and the surface of the piece is fully free to be worked.

The ledge surface can be part of a loading device or independent from it, such as in the case in which the loading device is absent and the pieces are loaded manually.

The machine tool or work centre according to the invention can be fitted with a loading device which includes in combination: a magazine for the workpieces; a support underneath said magazine to accept single workpieces from the magazine; blocking means to block the workpieces, said blocking means being mobile in relation to the magazine to get close to it and remove the workpieces and distance itself from the magazine and transfer the pieces towards a work area; unloading means to remove the worked pieces from said blocking means and transfer them to an area from where the worked pieces are removed. The blocking means is preferably mobile along at least one numeric control translation axis or two numeric control translation axes, which are preferably orthogonal to one another and horizontal. Preferably the blocking means defines a blocking position of the workpiece that is higher than the piece-carrying saddle which carries said blocking means, to avoid the collision of the tools of a work head against said saddle.

The unloading means can include horizontal moving bars, associated to rest surfaces on which said bars deposit the worked pieces.

Conveniently, in a possible embodiment of the invention, the support for the workpieces is arranged at a greater height than an unloading trajectory of the worked pieces, along which the unloading means moves. Furthermore, preferably, the blocking means defines a blocking and working height of the piece, above the trajectory of the unloading means.

### Brief description of the drawings

The invention is better understood following the description of the drawing which shows a practical non - restrictive embodiment of the invention. More specifically, the drawing shows:
Fig. 1 a front view of the work centre according to the invention;
Fig. 2 a side view according to II-II of Fig. 1;
Fig. 3 a plan view according to III-III of Fig. 1;
Fig. 4A and 4B two symmetrical legs of a chair, which can be worked with the work centre according to the invention;
Fig. 5 a plan view of a piece loading device for the work centre of Fig.1 to 3;
Fig. 6 a side view according to VI-VI of Fig. 5;
Fig. 7 a plan view similar to Fig. 5 with a different arrangement of the loading devices;
Fig. 8 a side view according to VIII-VIII of Fig. 7;
Fig. 9 an unloading sequence of a worked piece and loading of a piece to be worked ;
Fig. 10 and 11 illustrative sequences of the methods of reference of a piece in relation to the surfaces of the blocking means in two different situations.

### Detailed description of the of preferred embodiments of the invention

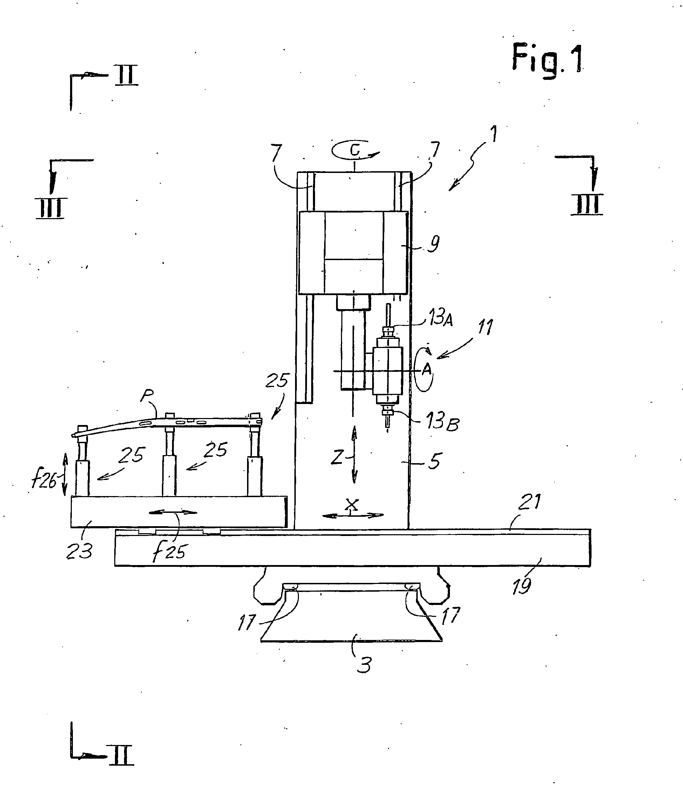

Fig.1 to 3 show a work centre to which the present invention is applied. In the context of this description and the attached claims the term work centre is also to be understood as encompassing machine tools and in general defines a group of elements and assembled parts with the function of moving reciprocally one in relation to the other a workpiece and one or more tools along numeric control axes, to perform multiple chip-removal operations on the workpieces with said tools.

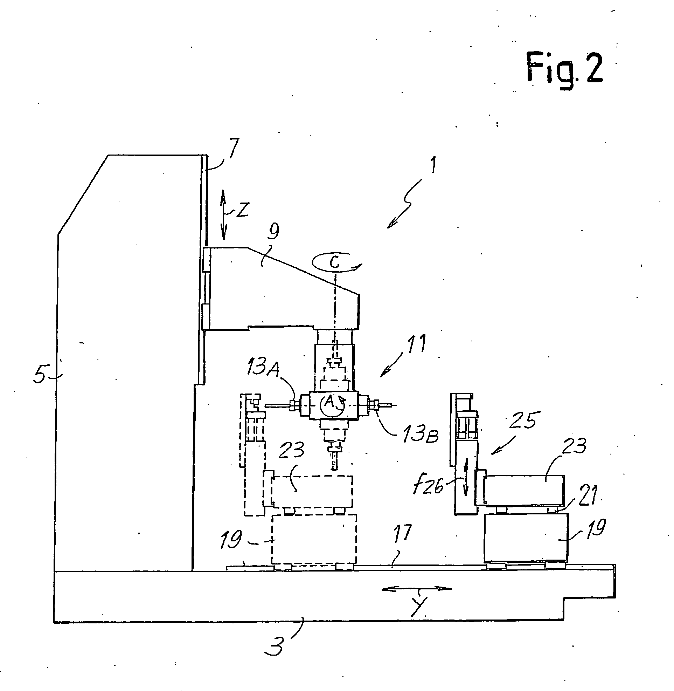

The work centre, generically indicated with 1, includes a horizontal base 3 with a vertical upright 5. The vertical upright 5 has vertical runners 7 for the movement of a saddle 9 carrying a work head 11. In this embodiment the head 11 has a double spindle with two tools 13A and 13B. It must also be understood that the head can have a different shape, for example it can be a cross-shaped head with four spindles for four different tools, with the axes of the spindles which intersect or are side by side. This solution is traced with a broken line in Fig. 2 where a side view of a head with four tools at 90°C and respective spindles is shown. Other shapes with a different number of tools are also possible. The spindles can advantageously be single or double electrical spindles. The work centre can be fitted with one or more magazines of interchangeable tools, not shown and known.

The movement along runners 7 of saddle 9 carrying the head 11 is a numeric control movement along a first vertical translation axis indicated by Z. Head 11 is a so-called bi-rotational head, that is fitted with a double movement of oscillation or rotation around two respective numeric-control oscillation or rotation axes. In the drawing the first numeric control rotation axis is indicated by C. It is a vertical rotation or oscillation axis, which is parallel to the numeric-control translation axis Z. A indicates the second numeric-control oscillation or rotation axis of head 11. Axis A is orthogonal to the two-spindle axis of head 11.

A runner 17 is provided on base 3 for the movement of a carriage 19. Carriage 19 has a runner 21 for the translation movement along carriage 19 of a piece-carrying saddle 23.

Saddle 23 moves along a second numeric control horizontal translation axis X along runner 21 which is integral with carriage 19. This last one translates along runner 17 according to a third numeric-control translation axis Y, horizontal and orthogonal to axis X. Overall, therefore, the work centre is a machine with five numeric control axes, three translation axes (X,Y,Z) and two oscillation axes (A,C). The tools move along axes A,C,Z and the pieces along axes X and Y.

Means to block the workpiece P is mounted on saddle 23. Advantageously, according to the example of realization illustrated, the blocking means has two or preferably (as in the drawing) three distinct blocking elements 25 which are substantially similar to one another.

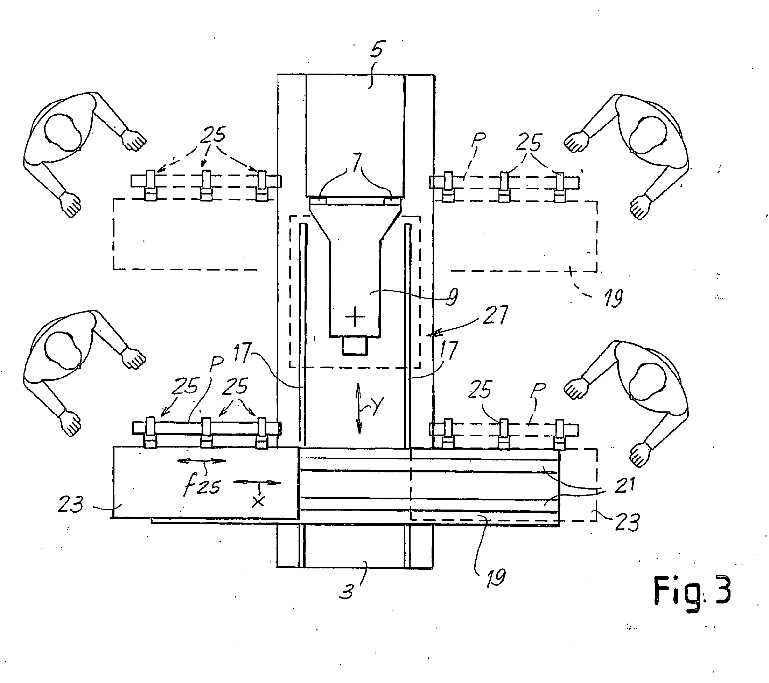

Each blocking element 25 is shaped like an upright and overhangs the saddle 23 (Fig. 2) on the side facing the fixed upright 5. The three blocking elements 25 are adjustable according to double arrow f25 (Fig. 1 and 3) in a direction parallel to the second translation axis X. Conveniently, in the example shown the blocking elements are also adjustable in a vertical direction according to double arrow f26 (Fig. 1 and 2). This double regulation or adjustment of the blocking elements makes it possible to arrange them in the most suitable positions to adapt to the shape of workpiece Po.

In the schematic examples of Fig. 1 to 3 the workpiece P is the rear leg of a chair, that is that element of the chair which also forms a support upright of the backrest. Piece P lies on an essentially vertical plane parallel to the numeric control axis X and is held at its ends by two blocking elements 25 and in an intermediary position by the third blocking element 25. This third intermediate blocking element is useful when pieces P to work are particularly long, like in the example shown. The possibility of using only two blocking elements 25 or more than three blocking elements 25, depending on the shape of the piece, is also possible. The same machine can be equipped with a variable number of blocking elements 25 according to the working processes to be performed.

As is clearly understood from the drawings of Fig. 1 to 3 piece P can be worked by the tools of head 11 on all sides except the lower one. Fig. 2 shows a full view of the loading position of the piece and the position to which the carriage 19 moves, to make tools of head 11 work the face of the piece P opposite the vertical upright 5, is shown with a broken line. By translating saddle 23 to the position shown in Fig. 1, the right end (in the drawing) of piece P can be worked. Translating instead the same saddle 23 in the position symmetrical to that shown in Fig. 1 it is possible to work the other end of the same piece.

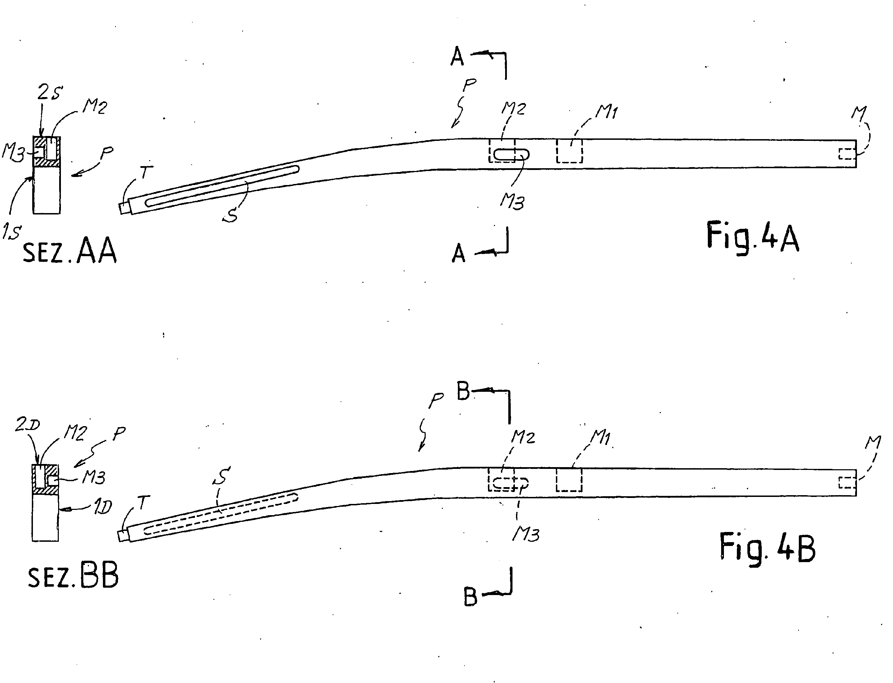

With this configuration it is possible to work pieces with the shape illustrated in Fig. 4A and 4B. Fig. 4A shows the rear left leg of a chair, seen laterally from the inside of the chair and the respective section according to A-A, while Fig. 4B shows the corresponding right leg seen from the outside, in addition to the cross section of the same leg according to B-B.

As can be observed in these illustrations both legs must be worked on multiple sides. The left leg of Fig. 4A has a tenon T at one end and a mortise M at the opposite end. Tenon T can be used for fixing the upper transversal element of the backrest of the chair, while mortise M can be used to fix a foot of the chair. A groove F close to tenon T is also provided to fix the backrest, while in the central area of the chair, further cavities or mortises M1, M2 and M3 are provided to fix the transversal connection components of the chair legs and seat support. These machined elements are arranged in a symmetrical manner on the two legs and are indicated with the same reference numbers in the two Fig. 4A and 4B.

The particular design of the work centre described makes it possible to reach all sides of the piece whether it be a left leg or a right leg, on which the work must be performed to make the tenons, mortises and grooves as described. The two pieces of Fig. 4A and 4B are mounted and blocked on saddle 23 by blocking elements 25 without the need to change the arrangement said elements 25.

This is obtained thanks to the fact that with movements along X, Y, Z, A, C the tools of head 11 can work all sides (excluding the lower one) of the piece.

Fig. 3 shows how the design of work centre 1 allows to arrange the loading means of the pieces to be worked and the unloading means of the worked pieces in four different positions, two for each side of base 3 and more precisely close to and laterally to upright 5, and at a distance from upright 5 close to the distal end of base 3. As upright 5 is fixed, the work area of head 11 can be easily enclosed within a guard 27 which defines the volume that can be reached by the tools of head 11 leaving the space on the side of the base 3 free to perform the loading and unloading operations simply by translating saddle 23 towards one or the other end of carriage 19.

This allows different loading devices to be used for the same work centre, which can also be arranged and maintained in a fixed position though being used alternatively according to the pieces being processed and/or the amount of pieces to work. For example two different loading devices can be used to load right and left elements of the chair. Or an automatic loading device can be present in one of the loading or unloading positions to work pieces in series and a manual or semi-automatic loading device in a different position, to work single pieces or small batches.

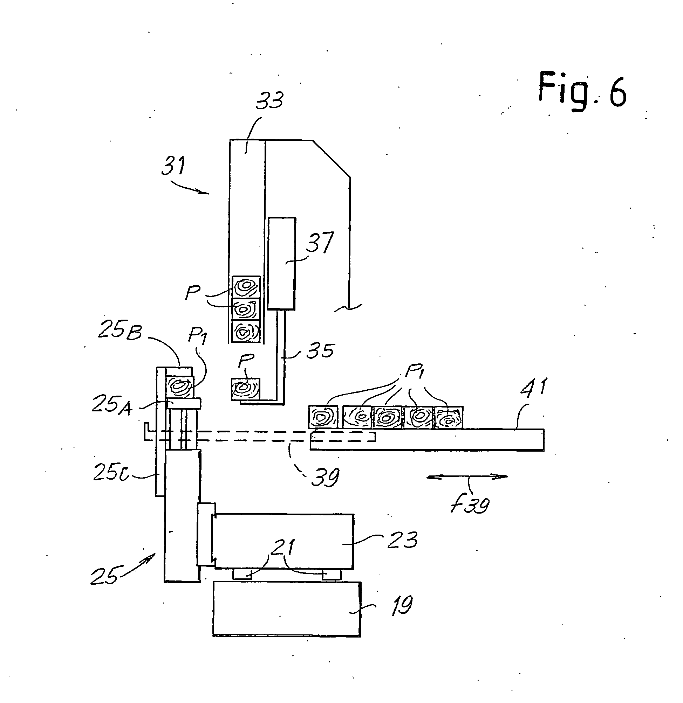

Figs. 6 to 11 show possible shapes of a loading device particularly suited to feeding the pieces to work into the machine tool or work centre 1 described to this point. It must however be understood that the same loading device could be used for work centres that are different to that shown and that the work centre 1 could be fitted with a loading device different to those illustrated in Fig. 6 onwards.

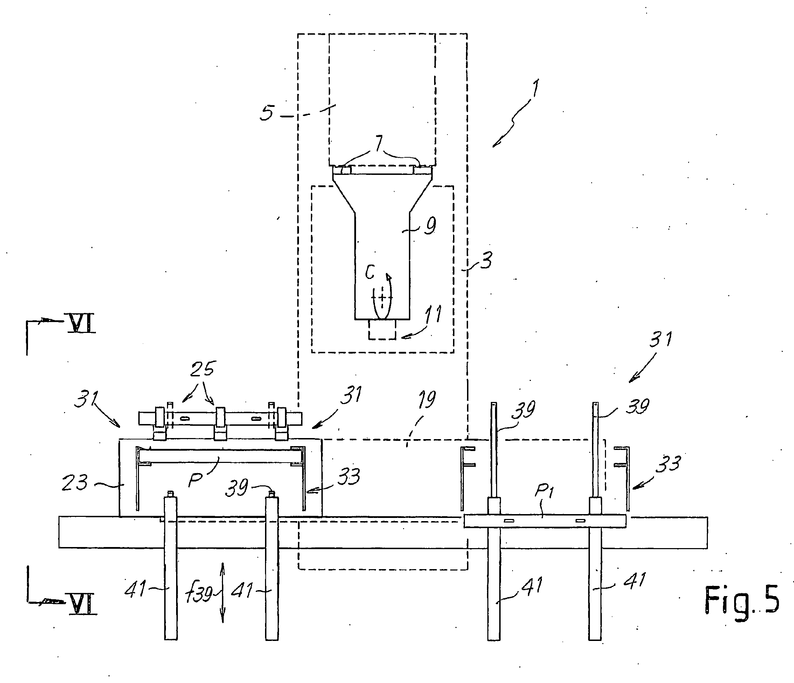

With reference to Figs. 5 and 6 in which the elements of the work centre are mainly shown in broken lines, the loading device, indicated with 31, has a magazine 33, in which pieces P to work are stacked. The pieces fall by gravity towards the lower end of magazine 33. Here suitable individualisation elements, known and not shown, transfer one piece P at a time to a couple of bars 35 that are vertically mobile and controlled by a piston-cylinder actuator 37. Bars 35 take single pieces P to work from the lower end of magazine 33 and bring them to the correct height to be blocked by blocking elements 25.

As the pieces may be non rectilinear (like for example in the case of the chair legs of Fig. 4A and 4B) bars 35 associated to the two ends of magazine 33 usually reach different heights that correspond to the heights at which blocking elements 25 of the ends are adjusted. Bars 35 can differ in number according to the type of pieces or type of loading device.

Unloading devices 39 are located under magazine 33 and have an alternate movement according to double arrow f39 to take the single worked pieces from blocking elements 25 and transfer them onto rests 41 defining unloading surfaces, where the worked pieces (indicated with P1 in Fig. 6) are aligned and removed by the operator or in another way. In the example shown rests 41 are also used as runners and housing for unloading devices 39, which are moved according to double arrow f39, by known means, for example a piston cylinder actuator, a pin and rack mechanism or similar.

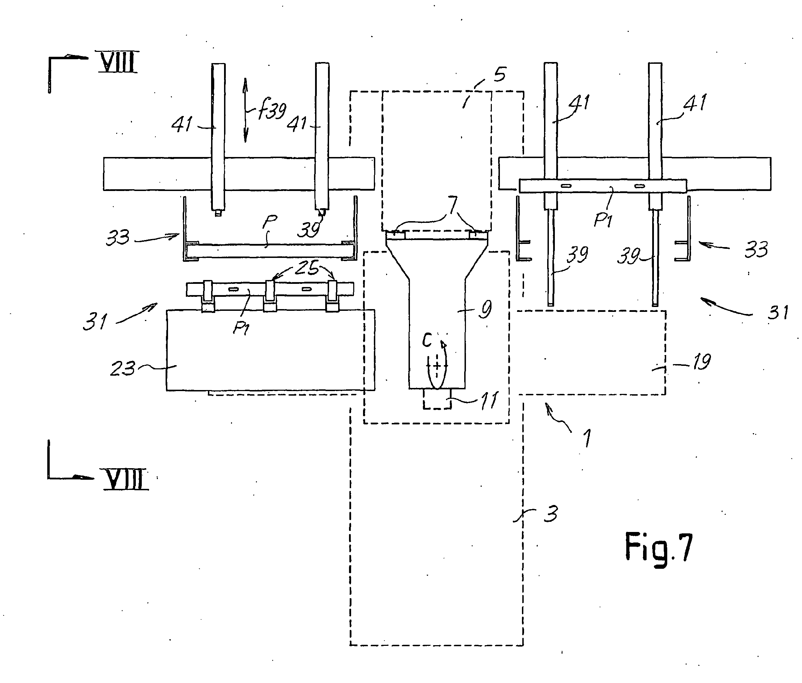

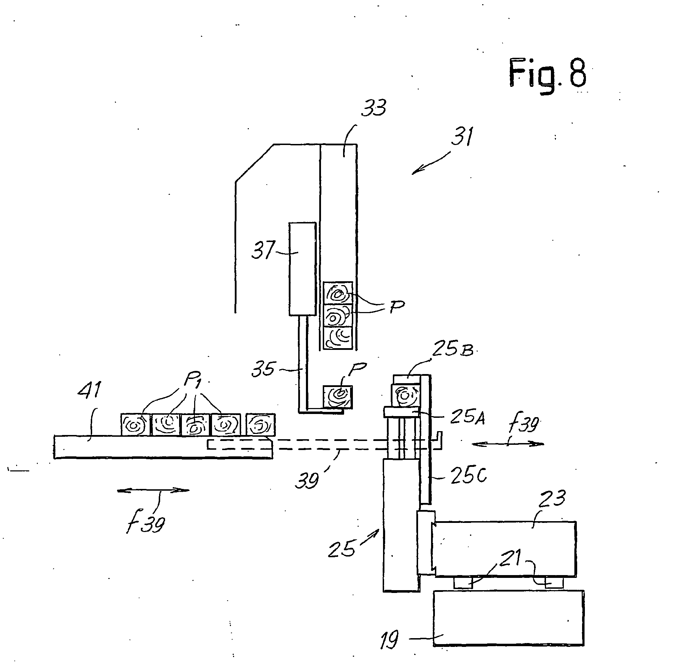

In the example shown in Fig. 5 two loading devices 31 are present and arranged symmetrically to base 3 of work centre 1 at a distance from upright 5. This is one of the feasible arrangements, being understood that according to the needs of the work centre user it could also be that a single loading device 31 is used. Fig. 7 and 8 show (still in plan and side view) a different arrangement of the same loading device 31 again in a double configuration, on both sides of the upright 3. This arrangement can be alternative to that of Fig. 5 and 6 or combined to it when more than two loading devices shall to be combined with the work centre 1. It is also possible to arrange two loading devices on the same work centre on the same side of base 3, one in one of the two positions indicated in Fig. 5 and the other in one of the two positions indicated in Fig. 7.

Equal numbers indicate equal or equivalent parts of Fig. 7, 8 and 5, 6 respectively.

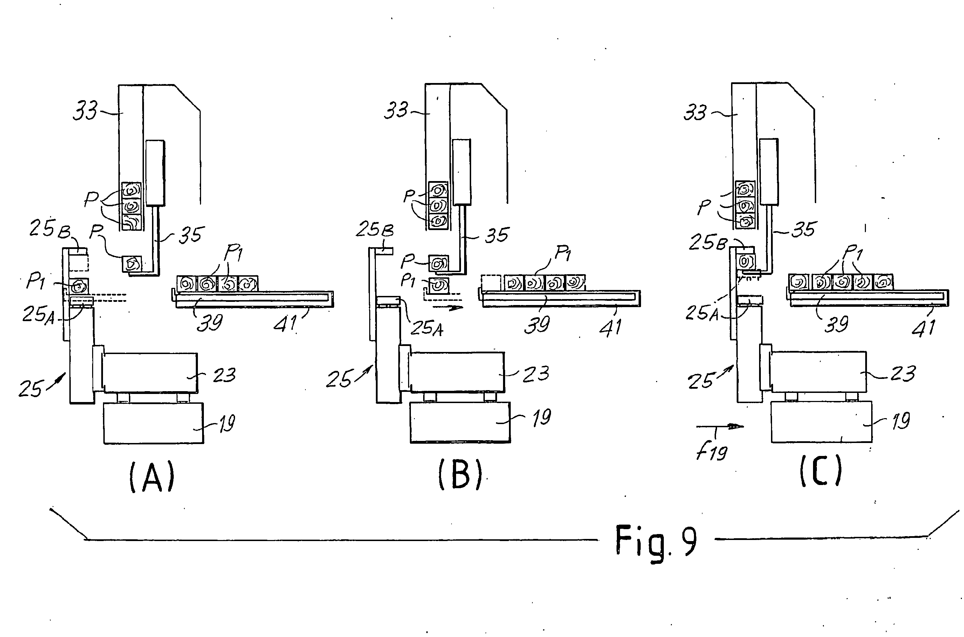

The unloading cycle of worked piece P1 and the loading of a piece P to be worked is shown in great detail in the sequence of Fig. 9A, 9B and 9C. One piece P to work is unloaded by magazine 33 onto bars 35, which are lowered to the height of blocking elements 25. The worked piece P1 is lowered by the downward movement of lower pushers 5A of blocking elements 25 to a height corresponding to that of unloading devices 39. These have been previously taken out up to the position outlined in Fig. 9A and carriage 19 is positioned at a distance from supports or rests 41 to allow the unloading devices 39 to be positioned below worked piece P1.

The height of worked piece P1 is lower than the height of bars 35, so that with a movement according to arrow f39 (Fig. 9B) the unloading devices 39 can translate worked piece P1 towards supports 41 making it pass under bars 35, which support the piece P which shall be machined at the next cycle. Subsequently carriage 19 translates according to arrow f19 in the direction of numeric control axis Y to bring blocking elements 25 below magazine 33, so that fixed upper ledges 25B of blocking elements 25 are placed above the piece to work supported by bars 35. The next lifting movement of lower pushers 25A (controlled by a piston-cylinder actuator, not shown, or by another actuator) lifts piece P to work blocking it between lower pushers 25A and upper ledges 25B. The latter can be adjusted in height, as mentioned above, so that in a blocked position the piece P to work takes on the desired position for performing subsequent machining of the sides of the piece.

It is clear according to what has been described to this point that loading device 31 makes it possible to load the pieces to work and unload the worked pieces exploiting the movement of the opening of blocking elements 25 and the translation along numeric control axis Y of carriage 19. Arranging two loading devices as shown in Fig. 5 or Fig. 7 the translation movement of saddle 23 according to the X axis also allows to bring blocking elements 25 to the same height of one or the other of the two loading devices and therefore to take for example two symmetrical pieces from one or the other of the two loading devices 31 placed on the two sides of base 3.

Herein above a description has been given of how the machine or work centre 1 works symmetrical pieces such as right and left chair legs (Fig. 4A,4B) without requiring adjustments of blocking elements 25. The symmetrical pieces can be blocked onto blocking elements 25 without changing the position of the latter. Nevertheless the right and left pieces must be positioned with reference to ledge surfaces or reference surfaces different for the two cases. More specifically the surfaces of the piece, in correspondence of which the piece itself must be rested on reference surfaces of the blocking equipment, are usually the surfaces on which chip removal machining is performed.

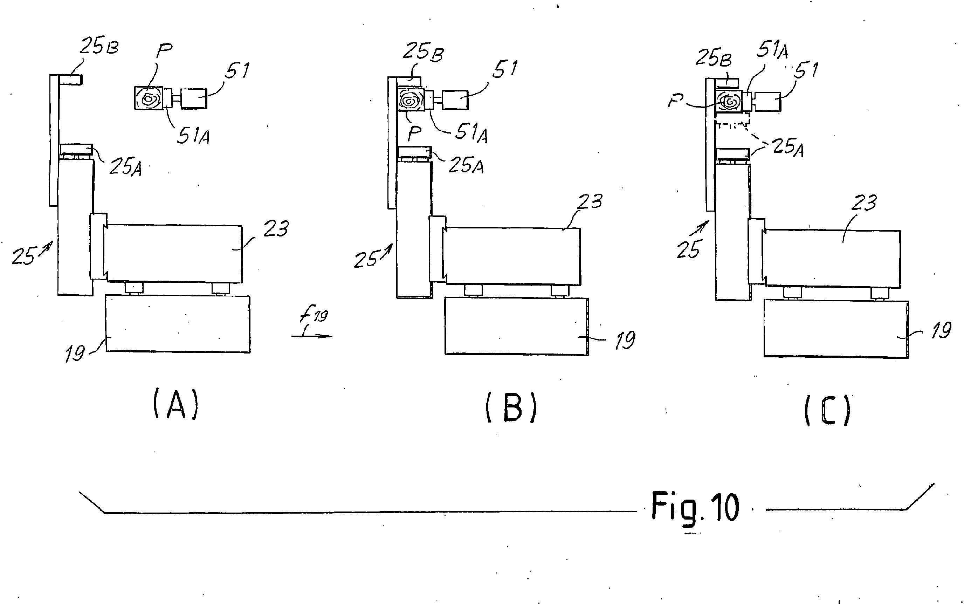

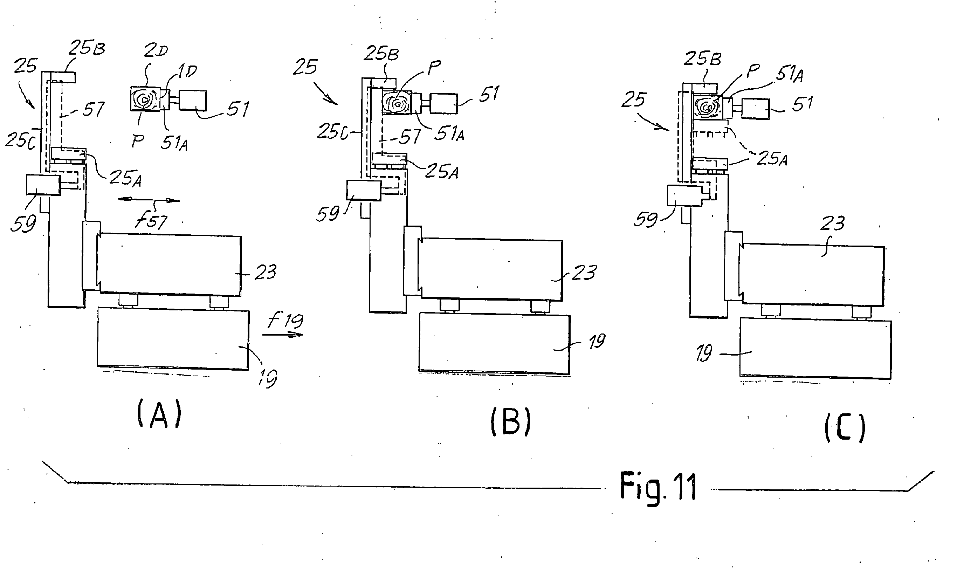

With the aim of using the same blocking tools, for blocking e.g. the right and left pieces of a chair referring them each time to the correct reference surface, the mechanisms shown in detail in Fig. 10 and 11 are used and omitted from the remaining illustrations for greater clarity of drawing.

In fact, with reference to Fig. 4A and 4B, for example, the piece of Fig. 4A (left chair leg) must be blocked on blocking elements 25 using as reference surfaces those indicated by arrows 1S (vertical surface) and 2S (horizontal surface). The right leg (Fig. 4B) on the other hand must be referred to surfaces 1 D (vertical) and 2D (horizontal). As is evident from the description above, surfaces 2S and 2D are brought by lifting pushers 25A to abut against the same reference surfaces defined by the lower surface of fixed ledges 25B. Therefore, these reference surfaces 2S and 2D do not require different adjustments for the two symmetrical pieces of Fig. 4A and 4B.

On the other hand vertical reference surfaces of 1S and 1 D must be rested on verification or reference surfaces of the machine different in both cases. Fig. 10 shows the method of positioning of piece P to work with reference to surfaces 2S and 1S. This is obtained by means of piston cylinder actuators 51 (shown in Fig. 10 and 11 omitted in the remaining illustrations for clarity) which are part of loading device 31 and shown by way of example by bars 35. When the piece must be referred to surface 1S, it must abut against the lower surface of the fixed upper ledges 25B of single elements 25, and in addition thereto also against the lateral surface of each upright 25C of which the various fixed ledges 25B of blocking elements 25 are a part.

The sequence of Fig. 10A, 10B and 10C shows how this operation of reference and positioning of the piece comes about. In Fig.10A piece P is supported by bars 35 (not shown in Fig. 10) in front of blocking elements 25. These are translated from left to right (in the illustration) with a movement according to f19 along numeric control axis Y of carriage 19. With this movement uprights 25C of blocking elements 25 abut against piece P carried by bars 35. Stop surfaces 51A brought by the rods of piston-cylinder actuators 51 push piece P against the surfaces of uprights 25C directed towards the piece itself, so that this correctly bears against all uprights 25C of the different blocking elements 25.

The subsequent lifting movement of lower pusher 25A forces piece P against the lower surface of fixed ledge 25B of single elements 25. Within piston-cylinder actuators 51 there is a relatively limited pressure of the work fluid, so that piece P is correctly arranged and forced against uprights 25C for a correct reference of the piece itself.

Fig. 11 shows how a piece P symmetrical to that positioned with the sequence illustrated in Fig. 10A -10C is correctly positioned to the surfaces of reference 1 D and 2D. In this case piece P is still presented, supported by bars 35, in front of blocking elements 25. These are fitted with vertical pushers 57 parallel to uprights 25C and shown in Fig. 11 but omitted for clarity of drawing in the remaining illustrations. Vertical pushers 57 are mobile according to double arrow f57 and controlled by piston cylinder actuator 59 brought by the piece-carrying saddle 23 or by blocking elements 25.

To position piece P correctly with reference to surfaces 2D and 1 D, piston cylinder actuators 51 are blocked with pushers 51A in a set position and shutdown maintaining the pressure of the fluid within piston cylinder actuator 51 to a value able to exert on piece P a reaction force greater than the push exerted, by actuators 59 on the piece itself.

The movement of carriage 19 (Fig. 11A, 11B) along numeric control axis Y according to arrow f19 and the movement according to arrow f57 in the same direction of pushers 57 bring piece P to abut against pushers 51A associated with the rods of piston cylinder actuators 51, as shown in Fig. 11B. As the pressure in cylinders 51 is high, the cylinder rods do not withdraw but maintain the reference surface, which in this case is formed by the front side of pushers 51A turned towards uprights 25C, in the correct reference position. Further movement of carriage 19 according to f19 brings the device to the position of Fig.11C with a withdrawal of pushers 57, due to the prevalence of the pushing force of actuators 51 on the pushing force of actuators 59, which in this phase act essentially as pneumatic springs. Lifting of lower pushers 25A then pushes piece P to abut against upper ledges 25B of single blocking elements 25. With this sequence a piece P to work is correctly referred by its surfaces 1 D and 2D to the lower surfaces of upper ledge 25B of each blocking element 25 and to the vertical surface of single pushers 51A.

The method of positioning of the piece described with reference to Fig. 11A-11C can be used not only in the case of right and left pieces, as in the example shown (Fig. 4A, 4B). It can also be used when the piece to work presents a machining which develops on a considerable length and typically as far as one end of the piece itself. For example, in the case of cavity or groove S, this could extend to the end of piece P on which tenon T is located. In this case it is impossible to rest the reference surface (that is the surface on which the groove must be made S) against a verification, rest or abutment surface, which remains in contact with the piece as it is worked, as this would hinder the machining process. In this case it is useful to use rest or verifications surfaces 51A which are independent of the blocking elements.

It is understood that the drawing shows only an example of embodiment of the invention, which can vary in the shapes and arrangements without getting away from the scope of the invention as defined by the appended claims. Any presence of reference numbers in the attached claims has the aim of facilitating the reading of the claims with reference to the description and the drawing, and does not limit the scope of protection thereof.

## Claims

1. Work centre (1) for working long pieces (P) or the like including:
- a fixed vertical upright (5) having vertical runners (7) along which a saddle (9), bearing a work head (11) with a first (C) and a second (A) numeric control oscillation or rotation axis, is movable according to a first numerical control translation axis (Z);
- and a piece-carrying saddle (23), provided with a blocking means for the pieces to work (P), supported mobile along a second horizontal numeric control translation axis (X) on a carriage (19), said carriage being in turn mobile along a third horizontal numeric control translation axis (Y), to move towards and away from said vertical upright (5),
- said first rotation or oscillation axis (C) of the work head (11) is vertical, parallel to the first translation axis (Z);
**characterized in that**:
- said piece-blocking means (25) is arranged and designed to block long pieces (P) with an orientation substantial parallel to said second translation axis (X), along which said piece-carrying saddle (23) moves in relation to the carriage (19) which carries it;
- and said first rotation or oscillation axis (C) and said work head (11) are supported on said bearing saddle (9) at a distance from said upright (5) such that a piece (P) to be worked can be placed between said upright (5) and said work head (11) to make the tools of the work head (11) work the face of the piece (P) opposite said upright (5).

2. Work centre (1) according to claim 1, **characterized in that** said upright (5) is fixed with respect to a base (3) along which said carriage (19) moves according to said third translation axis (Y).

3. Work centre (1) according to claim 1 or 2, **characterized in that** said blocking means includes two blocking elements (25), and preferably three blocking elements (25), distanced from one another and substantially aligned along said second translation axis, (X) along which said piece-carrying saddle (23) moves, in relation to the carriage (19).

4. Work centre (1) according to claim 3, **characterized in that** said blocking elements (25) are adjustable in a vertical direction (f26) one independently of the other.

5. Work centre (1) according to claim 3 or 4, **characterized in that** said blocking elements (25) are adjustable horizontally in a direction (f25) parallel to said second translation axis (X), one independently of the other.

6. Work centre (1) according to one of the preceding claims, **characterized in that** said blocking means includes uprights (25C) vertically adjustable and fitted with pushers (25A) to block the workpieces.

7. Work centre (1) according to one of the preceding claims, **characterized in that** said blocking means includes uprights (25C) arranged at adjustable distances along said second translation axis (X).

8. Work centre (1) according to one of the preceding claims, **characterized in that** to said blocking means is associated at least one reference surface (51A), independent from the blocking means, arranged and constructed in such a way that the piece (P) to be blocked is referred to such surface (51A) with its own surface to which the machining operations are referred, and that the surface of the piece (P), to which the machining operations are referred, remains fully free to be worked after being blocked.

9. Work centre (1) according to one of the preceding claims, **characterized in that** said vertical upright (5) on which the work head (11) is supported is integral with a horizontal base (3)', on which a runner (17) for said carriage (19) is provided, the runner extending parallel to said third translation axis (Y).

10. Work centre (1) according to one of the preceding claims, **characterized in that** it has more piece-loading and unloading positions arranged laterally to a runner (17) of said carriage (19).

11. Work centre (1) according to one of the preceding claims, **characterized in that** said work head (11) has a plurality of spindles.

12. Work centre (1) according to claim 11, **characterized in that** said head (11) has a structure with four spindles arranged in a cross shape.

13. Work centre (1) according to one of the preceding claims, **characterized in that** said blocking means defines a piece blocking and working position raised in relation to the piece-carrying saddle (23) to avoid collision between work tools (13A, 13B) and said piece-carrying saddle (23).

## Patentansprüche

1. Arbeitsanlage (1) zum Bearbeiten von länglichen Werkstücken (P) oder dergleichen mit:
- einem festliegenden vertikalen Ständer (5) mit vertikalen Laufschienen (7), entlang welchen ein Support (9) gemäß einer ersten numerisch gesteuerten Translationsachse (C) bewegbar ist, der einen Bearbeitungskopf (11) mit einer ersten (C) und einer zweiten (A) numerisch gesteuerten Schwing- oder Rotationsachse trägt;
- und einem ein Werkstück tragenden Schlitten (23), der mit Feststellmitteln für die zu bearbeitenden Werkstücke (P) versehen ist, der entlang einer zweiten horizontalen, numerisch gesteuerten Translationsachse (X) auf einem Schlitten (19) bewegbar getragen ist, wobei der Schlitten seinerseits entlang einer dritten horizontalen, numerisch gesteuerten Translationsachse (Y) bewegbar ist, für eine Bewegung auf den vertikalen Ständer (5) zu und von diesem weg,
- die erste Rotations- oder Schwingachse (C) des Bearbeitungskopfes (11) vertikal, parallel zur ersten Translationsachse (Z) ist;
**dadurch gekennzeichnet, dass**
- die das Werkstück feststellenden Mittel (25) so angeordnet und gestaltet sind, dass sie längliche Werkstücke (P) mit einer Ausrichtung im Wesentlichen parallel zu der zweiten Translationsachse (X) feststellen, entlang welcher der, das Werkstück tragende Schlitten (23) in Relation zu dem diesen tragenden Schlitten (19) bewegbar ist;
- und die erste Rotations- oder Schwingachse (C) und der Bearbeitungskopf (11) auf dem tragenden Support (9) in einem Abstand zu dem Ständer (5) so getragen werden, dass ein zu bearbeitendes Werkstück (P) zwischen dem Ständer (5) und dem Bearbeitungskopf (11) so platziert werden kann, dass die Werkzeuge des Bearbeitungskopfes (11) die dem Ständer (5) gegenüber liegende Fläche des Werkstückes (P) bearbeiten können.

2. Arbeitsanlage (1) nach Anspruch 1, **dadurch gekennzeichnet, dass** der Ständer (5) mit Bezug auf eine Basis (3) festgelegt ist, entlang welcher der Schlitten (19) gemäß der dritten Translationsachse bewegt.

3. Arbeitsanlage (1) nach Anspruch 1 oder 2, **dadurch gekennzeichnet, dass** die Feststellmittel zwei Feststellelemente (25) und vorzugsweise drei Feststellelemente (25) aufweisen, die im Abstand zueinander im Wesentlichen entlang der zweiten Translationsachse (X) ausgerichtet sind, entlang welcher der, das Werkstück tragende Schlitten (23) sich in Relation zu dem Schlitten (19) bewegt.

4. Arbeitsanlage (1) nach Anspruch 3, **dadurch gekennzeichnet, dass** die Feststellelemente (25) in einer vertikalen Richtung (f26) unabhängig voneinander einstellbar sind.

5. Arbeitsanlage (1) nach Anspruch 3 oder 4, **dadurch gekennzeichnet, dass** die Feststellelemente (25) in einer Richtung (f25) parallel zu der zweiten Translationsachse (X) unabhängig voneinander horizontal einstellbar sind.

6. Arbeitsanlage (1) nach einem der vorstehenden Ansprüche, **dadurch gekennzeichnet, dass** die Feststellmittel Pfosten (25C) aufweisen, die mit Stößen (25A) vertikal einstellbar und befestigt sind, um die Werkstücke festzustellen.

7. Arbeitsanlage (1) nach einem der vorstehenden Ansprüche, **dadurch gekennzeichnet, dass** die Feststellmittel Pfosten (25C) aufweisen, die in einstellbaren Abständen entlang der zweiten Translationsachse (X) angeordnet sind.

8. Arbeitsanlage (1) nach einem der vorstehenden Ansprüche, **dadurch gekennzeichnet, dass** den Feststellmitteln wenigstens eine Referenzfläche (51A) zugeordnet ist, die unabhängig von den Feststellmitteln angeordnet und so konstruiert ist, dass das festzustellende Werkstück (P) auf eine derartige Fläche (51A) mit seiner eigenen Fläche bezogen ist, auf welche sich die Bearbeitungsvorgänge beziehen, und dass die Fläche des Werkstückes (P), auf welche sich die Bearbeitungsvorgänge beziehen nach dem Feststellen vollständig frei für die Bearbeitung bleibt.

9. Arbeitsanlage (1) nach einem der vorstehenden Ansprüche, **dadurch gekennzeichnet, dass** der vertikale Ständer (5), an welchem der Bearbeitungskopf (11) getragen ist, einstückig mit einer horizontalen Basis (3) ausgebildet ist, von welcher eine Laufschiene (17) für den Schlitten (19) vorgesehen ist, wobei sich die Laufschiene parallel zu der dritten Translationsachse erstreckt.

10. Arbeitsanlage (1) nach einem der vorstehenden Ansprüche, **dadurch gekennzeichnet, dass** sie mehrere Werkstücklade- und -entladepositionen aufweist, die seitlich zu einer Laufschiene (17) des Schlittens (19) angeordnet sind.

11. Arbeitsanlage (1) nach einem der vorstehenden Ansprüche, **dadurch gekennzeichnet, dass** der Bearbeitungskopf (11) eine Anzahl von Spindeln hat.

12. Arbeitsanlage (1) nach Anspruch 11, **dadurch gekennzeichnet, dass** der Kopf (11) eine Konstruktion mit vier Spindeln aufweist, die in Kreuzform angeordnet sind.

13. Arbeitsanlage (1) nach einem der vorstehenden Ansprüche, **dadurch gekennzeichnet, dass** die Feststellmittel eine Werkstückfeststell- und -bearbeitungsposition definieren, die in Relation zu dem, das Werkstück tragenden Schlitten (23) angehoben ist, um eine Kollision zwischen Werkzeugen (13A, 13B) und dem das Werkstück tragenden Schlitten (23) zu verhindern.

## Revendications

1. Centre d'usinage (1) pour usiner de longues pièces (P) ou similaires comprenant :
- un montant vertical fixe (5) comportant des glissières verticales (7) le long desquelles un chariot coulissant (9), supportant une tête d'usinage (11) avec un premier (C) et un deuxième (A) axes d'oscillation ou de rotation de commande numérique, est mobile selon un premier axe de translation de commande numérique (Z) ;
- et un chariot coulissant de support de pièce (23), pourvu de moyens de blocage pour les pièces à usiner (P), supporté en mouvement le long d'un deuxième axe de translation de commande numérique horizontal (X) sur un chariot (19), ledit chariot étant à son tour mobile le long d'un troisième axe de translation de commande numérique horizontal (Y), pour se rapprocher et s'éloigner dudit montant vertical (5),
- ledit premier axe de rotation ou d'oscillation (C) de la tête d'usinage (11) étant vertical, parallèle au premier axe de translation (Z);
**caractérisé en ce que** :
- lesdits moyens de blocage de pièce (25) sont agencés et conçus pour bloquer de longues pièces (P) avec une orientation sensiblement parallèle audit deuxième axe de translation (X), le long duquel ledit chariot coulissant de support de pièce (23) se déplace par rapport au chariot (19) qui le supporte ;
- et ledit premier axe de rotation ou d'oscillation (C) et ladite tête d'usinage (11) sont supportés sur ledit chariot coulissant de support (9) à une distance dudit montant (5) telle qu'une pièce (P) à usiner puisse être placée entre ledit montant (5) et ladite tête d'usinage (11) pour amener les outils de la tête d'usinage (11) à usiner la face de la pièce (P) qui est face audit montant (5).

2. Centre d'usinage (1) selon la revendication 1, **caractérisé en que** ledit montant (5) est fixe par rapport à une base (3) le long de laquelle ledit chariot (19) se déplace selon ledit troisième axe de translation (Y).

3. Centre d'usinage (1) selon la revendication 1 ou 2, **caractérisé en ce que** lesdits moyens de blocage comprennent deux éléments de blocage (25), et de préférence trois éléments de blocage (25), distants les uns des autres et sensiblement alignés le long dudit deuxième axe de translation (X), le long duquel ledit chariot coulissant de support de pièce (23) se déplace, par rapport au chariot (19).

4. Centre d'usinage (1) selon la revendication 3, **caractérisé en ce que** lesdits éléments de blocage (25) sont ajustables dans une direction verticale (f26) indépendamment les uns des autres.

5. Centre d'usinage (1) selon la revendication 3 ou 4, **caractérisé en ce que** lesdits éléments de blocage (25) sont ajustables horizontalement dans une direction (f25) parallèle audit deuxième axe de translation (X), indépendamment les uns des autres.

6. Centre d'usinage (1) selon l'une des revendications précédentes, **caractérisé en ce que** lesdits moyens de blocage comprennent des montants (25C) ajustables verticalement et équipés de pousseurs (25A) pour bloquer les pièces à usiner.

7. Centre d'usinage (1) selon l'une des revendications précédentes, **caractérisé en ce que** lesdits moyens de blocage comprennent des montants (25C) agencés à des distances ajustables le long dudit deuxième axe de translation (X).

8. Centre d'usinage (1) selon l'une des revendications précédentes, **caractérisé en ce que**, auxdits moyens de blocage, est associée au moins une surface de référence (51A), indépendante des moyens de blocage, agencée et réalisée de manière à ce que la pièce (P) à bloquer soit référencée par rapport à cette surface (51A) avec sa propre surface par rapport à laquelle les opérations d'usinage sont référencées, et que la surface de la pièce (P), par rapport à laquelle les opérations d'usinage sont référencées, reste totalement libre d'être usinée après son blocage.

9. Centre d'usinage (1) selon l'une des revendications précédentes, **caractérisé en ce que** ledit montant vertical (5) sur lequel la tête d'usinage (11) est supportée est d'un seul tenant avec une base horizontale (3), sur laquelle une glissière (17) pour ledit chariot (19) est prévue, la glissière s'étendant parallèlement audit troisième axe de translation (Y).

10. Centre d'usinage (1) selon l'une des revendications précédentes, **caractérisé en ce qu'**il comporte davantage de positions de chargement et de déchargement de pièce agencées latéralement par rapport à une glissière (17) dudit chariot (19).

11. Centre d'usinage (1) selon l'une des revendications précédentes, **caractérisé en ce que** ladite tête d'usinage (11) comporte une pluralité de broches.

12. Centre d'usinage (1) selon la revendication 11, **caractérisé en ce que** ladite tête (11) a une structure avec quatre broches agencées en croix.

13. Centre d'usinage (1) selon l'une des revendications précédentes, **caractérisé en ce que** lesdits moyens de blocage définissent une position de blocage et d'usinage de pièce surélevée par rapport au chariot coulissant de support de pièce (23) pour éviter une collision entre les outils d'usinage (13A, 13B) et ledit chariot coulissant de support de pièce (23).
